# EUROPEAN PATENT APPLICATION

(11) **EP 4 752 030 A1**
(43) Date of publication of application: **03.06.2026**
(21) Application number: 24938110.4
(22) Date of filing: 26.11.2024
(51) Int. Cl.: B61L 27/40, B60L 13/10, B61L 25/02, B61L 27/00

(54) **MAGLEV TRAIN TRACK STATOR SECTION CONTROL METHOD AND SYSTEM**

(30) Priority: 19.09.2024 CN 202411303563
(71) Applicant: CRSC Research & Design Institute Group Co., Ltd., Beijing 100070 (CN)
(72) Inventor: YAO, Wenhua, Beijing 100070 (CN); LIU, Ling, Beijing 100070 (CN); JIA, Yunguang, Beijing 100070 (CN); CUI, Junfeng, Beijing 100070 (CN); ZHANG, Ming, Beijing 100070 (CN)
(74) Representative: Meissner Bolte Partnerschaft mbB
(86) International application number: PCT/CN2024/134647
(87) International publication number: WO 2026/060817

(57) **Abstract**

The present disclosure relates to the technical field of track control, in particular to a method and system for controlling a stator segment on a maglev train track. The method includes: generating a route command based on target train position information, a target train speed and a train operation plan; determining a route section corresponding to the route command and a turnout in a route in a preset interlocking table; determining a target stator segment corresponding to the route command based on the route section and the turnout in the route; and controlling the target stator segment to be electrified. The present disclosure enables a mode for controlling a stator segment on a maglev train track to meet the traction control requirements of high-speed maglev trains.

## Description

### TECHINCAL FIELD

The present disclosure relates to the technical field of track control, and in particular to a method and system for controlling a stator segment on a maglev train track.

### BACKGROUND

A maglev train track is composed of multiple traction sections connected end-to-end in sequence. Each traction section is composed of multiple stator segments connected end-to-end, where the stator segment is configured to generate a magnetic field that interacts with an electromagnet on a maglev train, thereby propelling the maglev train to move. To propel the maglev train by means of the stator segment, it is necessary to control these segments on the maglev train track.

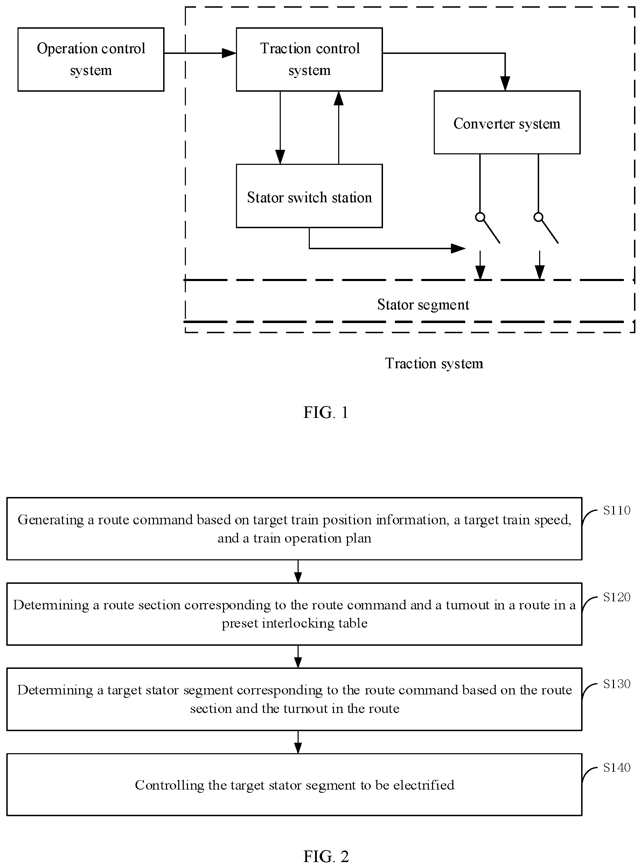

With reference to FIG. 1, a mode or controlling a stator segment on a maglev train track at present is as follows: an operation control system sends a speed restriction curve (including parking points) to a traction control system. The traction control system sends a switching instruction to a stator segment switchgear. The stator switchgear controls a switch between a converter system and the stator segment to close based on the switching instruction, and then the stator switchgear sends a switching state of the switch to the traction control system, enabling the traction control system to further control the converter system to control the stator segment to be electrified.

However, the foregoing method for controlling the stator segment on the maglev train track involves numerous intermediate links in a control chain, resulting in slow response speed in controlling the stator segment. Therefore, an existing mode for controlling the stator segment on the maglev train track is difficult to meet traction control requirements of high-speed maglev trains.

### SUMMARY

To facilitate a mode for controlling the stator segment on the maglev train track to meet traction control requirements of a high-speed maglev train, the present disclosure provides a method and system for controlling a stator segment on a maglev train track.

In a first aspect, the present disclosure provides a method for controlling a stator segment on a maglev train track, including:
generating a route command based on target train position information, a target train speed, and a train operation plan;
determining a route section corresponding to the route command and a turnout in a route in a preset interlocking table;
determining a target stator segment corresponding to the route command based on the route section and the turnout in the route; and
controlling the target stator segment to be electrified.

In a second aspect, the present disclosure provides an apparatus for controlling a stator segment on a maglev train track, including:
a command generating module, configured to generate a route command based on target train position information, a target train speed, and a train operation plan;
a first determining module, configured to determine a route section corresponding to the route command and a turnout in a route in a preset interlocking table;
a second determining module, configured to determine a target stator segment corresponding to the route command based on the route section and the turnout in the route; and
an electrifying control module, configured to control the target stator segment to be electrified.

In a third aspect, the present disclosure provides a computer device, including a memory and a processor, where a computer program is stored on the memory, and the processor, when executing the computer program, is configured to implement the steps in the foregoing method.

In a fourth aspect, the present disclosure provides a system for controlling a stator segment on a maglev train track, including an operation control component, where the operation control component includes a computer device described above; the operation control component is composed of a central operation control unit and a section operation control unit; the section operation control unit is in communication connection with the central operation control unit and further in communication connection with an on-board operation control unit, a turnout, and a stator segment switch; and the on-board operation control unit is further in communication connection with an on-board positioning device.

According to the method and system for controlling a stator segment on a maglev train track, a route command is generated based on target train position information, a target train speed and a train operation plan; a route section corresponding to the route command and a turnout in a route in a preset interlocking table are determined; a target stator segment corresponding to the route command is determined based on the route section and the turnout in the route; and the target stator segment is controlled to be electrified. By means of the foregoing implementations, after the route command is generated, the route section corresponding to the route command and the turnout in the route can be directly determined, the target stator segment is further determined based on the route section and the turnout in the route, and then the target stator segment is electrified, thereby implementing a control on the stator segment. This facilitates to simplify a control flow of the stator segment, thereby improving a response speed of controlling the stator segment. In turn, it is convenient for a mode for controlling a stator segment on a maglev train track to meet traction control requirements of high-speed maglev trains.

It should be understood that the content described in this section is not intended to identify key or important features of embodiments of the present disclosure, nor is it used to limit the scope of the present disclosure. Other features of the present disclosure will become readily understandable through the following description.

### BRIEF DESCRIPTION OF THE DRAWINGS

To describe the technical solutions in embodiments of the present disclosure more clearly, the following briefly introduces the accompanying drawings required for describing the embodiments. It should be understood that the accompanying drawings show merely some embodiments of the present disclosure, and thus should not be construed as a limitation on the scope. A person of ordinary skill in the art may still derive other drawings from these accompanying drawings without creative efforts.
FIG. 1 is a structural diagram of a stator segment control system in the prior art according to the background in the present disclosure;
FIG. 2 is a flowchart of a method for controlling a stator segment on a maglev train track according to an embodiment of the present disclosure;
FIG. 3 is a structural diagram of a system for controlling a stator segment on a maglev train track according to an embodiment of the present disclosure;
FIG. 4 is a diagram showing a relationship among a traction section, a turnout and a route command according to an embodiment of the present disclosure;
FIG. 5 is a structural diagram of an apparatus for controlling a stator segment on a maglev train track according to an embodiment of the present disclosure;
FIG. 6 is a structural diagram of a computer device according to an embodiment of the present disclosure;
FIG. 7 is a diagram of an internal structure of a computer-readable storage medium according to an embodiment of the present disclosure.

### DETAILED DESCRIPTION OF THE EMBODIMENTS

To make the objectives, technical solutions and advantages of the present disclosure more clearly, the present disclosure is further described in detail below in conjunction with accompanying drawings and embodiments. It should be understood that specific embodiments described herein are used only to explain the present disclosure, rather than to limit the present disclosure.

It should be noted that the terms "first", "second", and the like in the description and claims herein are used to distinguish similar objects and are not necessarily used to describe a particular order or sequence. It should be understood that data used in this way can be interchanged under appropriate circumstances, so that the embodiments described herein can be implemented in an order other than those illustrated or described herein. In addition, the terms "include", "comprise", and any variation thereof are intended to cover non-exclusive inclusions. For example, processes, methods, apparatuses, products or devices including a series of steps or units are not necessarily limited to clearly listed steps or units, but may include steps or units not clearly listed, or other steps or units inherent to these processes, methods, products or devices.

The term "and/or" herein is only an association relationship that describes an associated object, indicating that there may be three relationships. For example, A and/or B may indicate the following three situations: the presence of A alone, the simultaneous presence of both A and B, or the presence of B alone. In addition, the character "/" herein generally indicates that there is an "or" relationship between the associated objects before and after.

### Embodiment 1

FIG. 2 is a flowchart of a method for controlling a stator segment on a maglev train track according to an embodiment of the present disclosure. With reference to FIG. 2, the method may be executed by an apparatus for executing the method, the apparatus may be implemented in a software and/or hardware manner, and the method includes the following steps.

S110. A route command is generated based on target train position information, a target train speed, and a train operation plan.

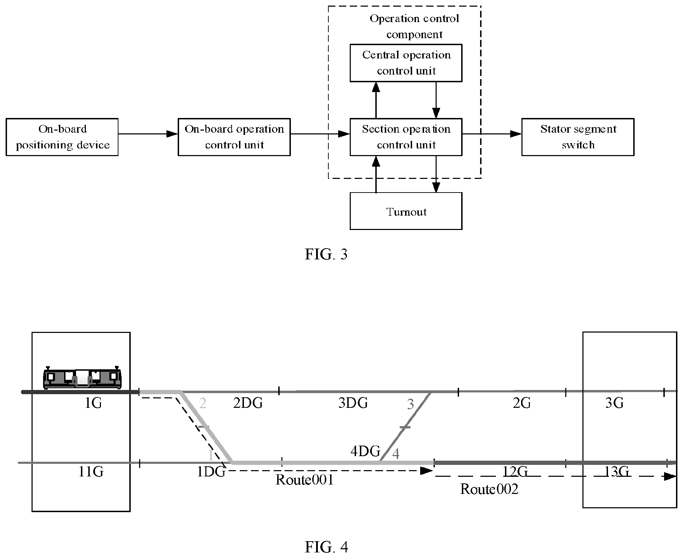

It should be noted that a method for controlling a stator segment on a maglev train track in this embodiment is executed based on a system for controlling a stator segment on a maglev train track shown in FIG. 3. Specifically, the system for controlling a stator segment on a maglev train track includes an on-board positioning device. The on-board positioning device is configured to obtain the target train position information and in communication connection with an on-board operation control unit. The on-board operation control unit is configured to control an operation of a target train and in communication connection with an operation control component. The operation control component includes a section operation control unit and a central operation control unit. The maglev train track is divided into multiple traction sections, and each traction section is divided into multiple stator segments, and each section corresponds to one section operation control unit. The section operation control unit is configured to monitor a corresponding traction section, the section operation control units are all in communication connection with the central operation control unit, and some traction sections may include a turnout, which enables the target train to run from a current maglev track to an adjacent maglev train track. If there is the turnout in a certain traction section, the turnout is in communication connection with the section operation control unit corresponding to the traction section. Each stator segment is provided with a corresponding stator segment switch, and the section operation control is in communication connection with the stator segment switch of each stator segment in the corresponding traction section.

The target train position information at least includes: a current position, a currently located section, and a train offset. The target train is a maglev train involved in the method for controlling a stator segment on a maglev train track according to this embodiment, the current position is a specific position of the target train at a current moment, and the currently located section is a specific traction section where the target train is located at the current moment. For example, with reference to FIG. 4, the target train is located at a traction section 1G at the current moment, so a corresponding current section where the target train is located at the current moment is 1G. The train offset is a direction that the target train moves from one end of the traction section to the other end. A speed detection device is further arranged on the target train, which is configured to detect an operation speed of the target train to obtain the target train speed. The central operation control unit can obtain a manually input train operation plan. The train operation plan specifically comprises information such as the stop stations of each maglev train, a stop duration corresponding to each stop station, departure time, and a next stop station. The target train can send the target train position information and the target train speed to the central operation control unit through the on-board positioning device and the speed detection device thereon. Further, the central operation control unit can generate the route command according to the target train position information, the target train speed and the obtained train operation plan. The route command is Route001 shown by a dashed arrow in FIG. 4, the traction sections involved in Route001 include 2DG, 1DG, and 4DG, the turnouts involved in Route001 include Turnout 2 and Turnout 1 marked with yellow numbers, as well as Turnout 4 marked with green number.

Specifically, the target train obtains the target train position information and the target train speed in real time during operation, and sends the target train position information and the target train speed to the central operation control unit. Further, the central operation control unit generates the route command according to the target train position information, the target train speed and the obtained train operation plan.

S120. A route section corresponding to the route command and a turnout in a route in a preset interlocking table are determined.

The preset interlocking table is configured to record each traction section and each turnout involved in the operation process of each maglev train. The route command includes the corresponding traction section and turnout. The route section is a traction section in the interlocking table that overlaps with the route command, and the turnout in the route is a turnout in the interlocking table that overlaps with the route command.

Specifically, the route section is obtained by determining the traction section in the preset interlocking table that overlaps with the route command, and the turnout in the route is obtained by determining the turnout in the interlocking table that overlaps with the route command.

S130. A target stator segment corresponding to the route command is determined based on the route section and the turnout in the route.

The target stator segment is an overlapping part between the route command and the route section involved therein, such as a green route part shown in FIG. 4. The target stator segment is determined based on the route section and the turnout in the route.

Specifically, the target stator segment corresponding to the route command is determined based on the route section corresponding to the route command and the turnout in the route.

S 140. The target stator segment is controlled to be electrified.

The central operation control unit can send the generated route command to the corresponding section operation control unit, so that the section operation control unit can control the corresponding target stator segment to be electrified. For example, taking one route section corresponding to the route command as an example, with reference to FIG. 3 and FIG. 4, the central operation control unit sends the route command to the section operation control unit corresponding to a route section 2DG corresponding to the route command, the route section 2DG and the target stator segment corresponding to the route command refer to all stator segments in a part from a left end of 2DG (as shown in FIG. 4) to the turnout 2. The section operation control unit corresponding to the route section 2DG turns on all stator segment switches of the corresponding target stator segments, thereby electrifying the target stator segments.

Specifically, the section operation control receives the route command issued by the central operation control unit and controls the corresponding target stator segment to be electrified.

It should be noted that in this embodiment, a route command is generated based on target train position information, a target train speed and a train operation plan; a route section corresponding to the route command and a turnout in a route in a preset interlocking table are determined; a target stator segment corresponding to the route command is determined based on the route section and the turnout in the route; and the target stator segment is controlled to be electrified. By means of the foregoing implementations, after the route command is generated, the route section corresponding to the route command and the turnout in the route can be directly determined, the target stator segment is further determined based on the route section and the turnout in the route, and then the target stator segment is electrified, thereby implementing a control on the stator segment. This facilitates to simplify a control flow of the stator segment, thereby improving a response speed of controlling the stator segment. In turn, it is convenient for a mode for controlling a stator segment on a maglev train track to meet traction control requirements of high-speed maglev trains.

### Embodiment 2

Embodiment 2 of the present disclosure provides a method for controlling a stator segment on a maglev train track. The method is configured to optimize "generating a route command based on target train position information, a target train speed and a train operation plan" in Embodiment 1. It should be noted that for the parts not detailed in this embodiment, reference may be made to the descriptions in other embodiments. The method includes the following steps.

S211. Whether to trigger generation of the route command is determined based on the target train position information.

Whether to trigger the generation of the route command can be determined through the currently located section in the target train position information. When the currently located section of the target train is a designated traction section, the generation of the route command needs to be triggered. The designated traction section may be a first traction section between a departure station and a destination station of the target train, a first traction section after a track route corresponding to one route command ends, or a certain traction section designated by a user.

Specifically, the currently located section in the target train position information is obtained in real time, and whether the currently located section is the designated traction section is determined, thereby determining whether to trigger the generation of the route command.

S212. If the generation of the route command needs to be triggered, the route command is generated based on the target train speed and the train operation plan.

If it is determined that the currently located section is the designated traction section, the generation of the route command needs to be triggered, and the route command can be generated by processing the obtained target train speed and the train operation plan.

Specifically, the obtained target train speed and train operation plan are processed to generate the route command.

S220. A route section corresponding to the route command and a turnout in a route in a preset interlocking table are determined.

S230. A target stator segment corresponding to the route command is determined based on the route section and the turnout in the route.

S240. The target stator segment is controlled to be electrified.

### Embodiment 3

Embodiment 3 of the present disclosure provides a method for controlling a stator segment on a maglev train track. The method is configured to optimize "generating a route command based on the target train position information and the train operation plan" in Embodiment 2. It should be noted that for the parts not detailed in this embodiment, reference may be made to the descriptions in other embodiments. The method includes the following steps.

S311. Whether to trigger generation of the route command is determined based on the target train position information.

S312A. If the generation of the route command needs to be triggered, whether the target train speed is greater than a first speed threshold but not greater than a second speed threshold is determined.

The first speed threshold and the second speed threshold are preset for the target train speed, and the obtained target train speed can be compared with the first speed threshold and the second speed threshold subsequently to determine the number of route commands needing to be generated for the target train over a continuous time sequence.

Specifically, if it is determined that the generation of the route command needs to be triggered, whether the target train speed is greater than the first speed threshold but not greater than the second speed threshold is further determined.

S312B. If the target train speed is greater than the first speed threshold but not greater than the second speed threshold, one route command is generated based on the train operation plan.

When the target train speed is greater than the first speed threshold but not greater than the second speed threshold, it is indicated that the target train is at an appropriate speed, and a certain amount of time is required for the target train to complete the operation on a track route corresponding to an upcoming route command. In this case, it is sufficient to generate only one route command for the target train. The central operation control unit can generate the route command corresponding to the target train based on the obtained train operation plan. The route command is generated through the train operation plan, which can ensure that the track route corresponding to the route command is exclusively for the target train to travel. This not only prevents the target train from affecting the operation of other maglev trains when operating on the track route corresponding to the route command, but also enables the target train to operate at a maximum speed allowed by the track route as much as possible.

Specifically, if it is determined that the target train speed is greater than the first speed threshold but not greater than the second speed threshold, the central operation control unit generates one route command by processing the train operation plan.

S312C. Whether the target train speed is greater than the second speed threshold is determined.

S312D. If the target train speed is greater than the second speed threshold, at least two route commands with a sequential order are generated based on the train operation plan.

If the target train speed is greater than the second speed threshold, it is indicated that the target train is at a relatively high speed, the target train can finish the operation on the track route corresponding to a first upcoming route command within a relatively short time. In this case, if only one route command is generated for the target train, it is possible that when the target train completes the operation on the track route corresponding to the first upcoming route command, a second route command over the sequential order has not yet been generated, leading to the fault in the process of propelling the target train, and even causing an operation accident of the maglev train. To avoid the foregoing faults and accidents, when it is determined that the target train speed is greater than the second speed threshold, at least two route commands with a sequential order need to be generated for the target train based on the train operation plan.

Specifically, if it is determined that the target train speed is greater than the second speed threshold, the central operation control unit obtains at least two route commands with the sequential order by processing the train operation plan. In this embodiment, the central operation control unit obtains two route commands with the sequential order by processing the train operation plan. In other embodiments, there is no limitation on the number of generated route commands with the sequential order.

S320. A route section corresponding to the route command and a turnout in a route in a preset interlocking table are determined.

S330. A target stator segment corresponding to the route command is determined based on the route section and the turnout in the route.

S340. The target stator segment is controlled to be electrified.

### Embodiment 4

Embodiment 4 of the present disclosure provides a method for controlling a stator segment on a maglev train track according to an embodiment of the present disclosure. With reference to FIG. 2, the method may be executed by an apparatus for executing the method, the apparatus may be implemented in a software and/or hardware manner, and the method includes the following steps.

S411. Whether to trigger generation of the route command is determined based on the target train position information.

S412A. If the generation of the route command needs to be triggered, whether the target train speed is greater than a first speed threshold but not greater than a second speed threshold is determined.

S412B. If the target train speed is greater than the first speed threshold but not greater than the second speed threshold, one route command is generated based on the train operation plan.

S412C. Whether the target train speed is greater than the second speed threshold is determined.

S412D. If the target train speed is greater than the second speed threshold, at least two route commands with a sequential order are generated based on the train operation plan.

S412E. Whether a track route between a current position of a target train and a start point of a track route corresponding to the last route command over the sequential order is in a state that a track is clear, a turnout position is accurate and the track is exclusively used by the target train are determined.

A start point of the track route corresponding to the last route command over the sequential order is also an end point of a track route corresponding to a second-to-last route command over the sequential order. For example, assuming that a total of two route commands with the sequential order is generated, such as Route001 and Route002 shown in FIG. 4. The track route between the current position of the target train and the start point of the track route corresponding to the last route command over the sequential order is a track route from the current position of the target train to the end point of the track route corresponding to Route001. Each section operation control unit can detect an occupancy state of a track section where the corresponding traction section is located in real time. By obtaining the track section occupancy state detected by each section operation control unit, the central operation control unit can determine whether the track route between the current position of the target train and the start point of the track route corresponding to the last route command over the sequential order is in a clear state. The section operation control unit corresponding to the turnout further sends a corresponding turnout position to the central operation control unit in real time, so that the central operation control unit can determine whether the track route between the current position of the target train and the start point of the track route corresponding to the last route command over the sequential order is in a state that the turnout position is accurate. By analyzing the interlocking table, the central operation control unit can determine whether the track route between the current position of the target train and the start point of the track route corresponding to the last route command over the sequential order is in a state that the track is exclusively used by the target train.

Specifically, the central operation control unit can determine whether the track route between the current position of the target train and the start point of the track route corresponding to the last route command in the sequential order is in a state that the track is clear, the turnout position is accurate and the track is exclusively used by the target train by obtaining and processing the track section occupancy state, the turnout position and the interlocking table.

S420. If the track route between the current position of the target train and the start point of the track route corresponding to the last route command in the sequential order is in the state that the track is clear, the turnout position is accurate and the track is exclusively used by the target train, the route section corresponding to the route command and the turnout in the route in the preset interlocking table are determined, and the route command is a first route command over the sequential order.

If it is determined that the track route between the current position of the target train and the start point of the track route corresponding to the last route command in the sequential order is in the state that the track is clear, the turnout position is accurate and the track is exclusively used by the target train, it is indicated that the track route in this case is suitable for the subsequent operation of the target train. Next, it is necessary to determine a traction section and a turnout in the interlocking table that overlap with the first route command over the sequential order to obtain the route section and the turnout in the route. This facilitates the further determination of a target stator section in subsequent steps.

S430. A target stator segment corresponding to the route command is determined based on the route section and the turnout in the route.

S440. The target stator segment is controlled to be electrified.

### Embodiment 5

Embodiment 5 of the present disclosure provides a method for controlling a stator segment on a maglev train track. The method is configured to optimize "generating a route command based on target train position information and the train operation plan" in Embodiment 2. It should be noted that for the parts not detailed in this embodiment, reference may be made to the descriptions in other embodiments. The method includes the following steps.

S511. Whether to trigger generation of the route command is determined based on the target train position information.

S512A. If the generation of the route command needs to be triggered, a main route command and a standby route command are generated based on the train operation plan and the target train speed.

The standby route command is a standby route command generated to prevent a situation that the main route command from fails to execute due to unexpected circumstances. Such unexpected circumstances include temporary control of some tracks, emergency maintenance requirements for some tracks, and the like.

Specifically, when it is determined that the generation of the route command needs to be triggered, the central operation control unit, based on the train operation plan and the target train speed, generates not only the main route command but also at least one standby route command.

S512B. The route command is obtained based on the main route command and the standby route command.

The route command includes the main route command and the standby route command.

S520. A route section corresponding to the route command and a turnout in a route in a preset interlocking table are determined.

S530. A target stator segment corresponding to the route command is determined based on the route section and the turnout in the route.

S540. The target stator segment is controlled to be electrified.

### Embodiment 6

Embodiment 6 of the present disclosure provides a method for controlling a stator segment on a maglev train track. The method is configured to optimize "determining a target stator segment corresponding to the route command based on the route section and the turnout in the route" in Embodiment 1. It should be noted that for the parts not detailed in this embodiment, reference may be made to the descriptions in other embodiments. The method includes the following steps.

S610. A route command is generated based on target train position information, a target train speed, and a train operation plan.

S620. A route section corresponding to the route command and a turnout in a route in a preset interlocking table are determined.

S631. Whether the route section is in a clear state is determined.

One route command may include multiple route sections, some or all stator segments in the route section are required as target stator segments for propelling the target train in subsequent steps. To this end, whether the route section corresponding to the route command is in a clear state needs to be determined. The section operation control unit can monitor an occupancy state of the corresponding traction section in real time, and sends the occupancy state to the central operation control unit, so that the central operation control unit can determine whether the route section is in a clear state, wherein the occupancy state includes two states: clear and occupied.

Specifically, the central operation control unit obtains an occupancy state of the route section through the section operation control unit corresponding to the route section, thereby determining whether the corresponding route section is in a clear state.

S632. If the route section is in the clear state, whether the turnout in the route is located at a position corresponding to the route command needs to be continuously determined.

A state that the turnout in the route is located at the position corresponding to the route command can be referred to in FIG. 4. For example, the turnout in one route corresponding to the route command Route001 is a turnout 2, the route command is to control the target train to pass through a first route section 2DG first and to turn to a second route section 1DG at the turnout 2. In this case, the turnout 2 needs to be in a reverse position. At this time, it is considered that the turnout in the route is located at the position corresponding to the route command, and so on for the turnout 1 and the turnout 4, and further details will not be repeated. It should be noted that the central operation control unit can obtain the position of the turnout in the route through the section operation control unit.

Specifically, if it is determined that the route section is in the clear state, whether the turnout in the route corresponding to the route command is located at a position corresponding to the route command is further determined.

S633. If the turnout in the route corresponding to the route command is not located at the position corresponding to the route command, the turnout in the route is adjusted to the position corresponding to the route command.

Specifically, if the central operation control unit determines that each of the turnouts in the route is not located at the position corresponding to the route command, the section operation control unit corresponding to the central operation control unit adjusts the turnout in the route to the position corresponding to the route command.

S634. The route section and the turnout in the route are locked to obtain a target section and a target turnout.

The target section is a route section in a locked state, the target turnout is a turnout in the route at a locked state, and the target section and the target turnout are exclusively used by the target train.

Specifically, the central operation control unit locks the route section to obtain the target section, and locks the turnout in the route to obtain the target turnout.

S635. A target stator segment corresponding to the route command is obtained based on the target section and the target turnout.

The central operation control unit can determine a stator segment which is about to participate in the traction of the target train in the target section based on the obtained target section and target turnout, that is, the target stator segment.

Specifically, the central operation control unit can determine a stator segment which is about to participate in the traction of the target train in the target section based on the obtained target section and target turnout to obtain the target stator segment.

S640. The target stator segment is controlled to be electrified.

### Embodiment 7

Embodiment 7 of the present disclosure provides a method for controlling a stator segment on a maglev train track. The method is configured to optimize "determining a target stator segment corresponding to the route command based on the route section and the turnout in the route" in Embodiment 6. It should be noted that for the parts not detailed in this embodiment, reference may be made to the descriptions in other embodiments. The method includes the following steps.

S710. A route command is generated based on target train position information, a target train speed, and a train operation plan.

S720. A route section corresponding to the route command and a turnout in a route in a preset interlocking table are determined.

S731. Whether the route section is in a clear state is determined.

S732. If the route section is in the clear state, whether the turnout in the route is located at a position corresponding to the route command needs to be continuously determined.

S733. If the turnout in the route is not located at the position corresponding to the route command, the turnout in the route is adjusted to the position corresponding to the route command.

S734. The route section and the turnout in the route are locked to obtain a target section and a target turnout.

S735A. Whether the target turnout is arranged on the target section is determined.

There may be a target turnout in the target section corresponding to the route command, for example, in FIG. 4, there is a target turnout (turnout 2) in the target section 2DG, there may be no target turnout in the target section corresponding to the route command. If there is no target turnout in the target section 12G, whether the target turnout is arranged on the target section needs to be determined at first.

Specifically, the central operation control unit can determine whether the target turnout is arranged on the target section by querying the interlocking table.

S735B. If the target turnout is arranged on the target section by querying the interlocking table, whether the target turnout serves as a start point or end point of a route on the corresponding target section is determined based on the route command.

With reference to the target section 2DG in FIG. 4, the target train enters from a left end of the target section 2DG and arrives the target turnout (turnout 2) when passing through the target section 2DG based on the route command. In this case, the target turnout refers to the start point of the route on the target section 2DG. The target train, when passing through the target section 1DG based on the route command, enters the target section 1DG from the target turnout (turnout 1) and exits from a right end of the target section 1DG. In this case, the target turnout refers to the end point of the route on the target section 1DG.

Specifically, if it is determined that the target turnout is arranged on the target section, whether the target turnout serves as the start point or end point of the route on the corresponding target section is further determined based on the route command.

S735C. If it is determined that the target turnout serves as the start point of the route on the corresponding target section based on the route command, a stator segment between the target turnout and an end point of the target section where the target turnout is located serves as a target stator segment.

If the start point of the route is a start position when the target train enters one target section, if a running direction of the target train in one target section is from a left end of the target section to a right end of the target section, the right end of the target section is the end point of the target section. In a case that the target turnout serves as the start point of the route on the corresponding target section, the stator segment between the target turnout and the end point of the target section where the target turnout is the target stator segment.

Specifically, if it is determined that the target turnout serves as the start point of the route on the corresponding target section based on the route command, a stator segment between the target turnout and the end point of the target section where the target turnout is located serves as the target stator segment.

S735D. If it is determined that the target turnout serves as the end point of the route on the corresponding target section based on the route command, a stator segment between the start point of the target section and the target turnout serves as the target stator segment.

If the running direction of the target train in one target section is from the left end of the target section to the right end of the target section, the left end of the target section servers at the start point of the target section. In a case that the target turnout serves as the end point of the route on the corresponding target section, a stator segment between the start point of the target section and the target turnout is the target stator segment.

Specifically, if it is determined that the target turnout serves as the end point of the route on the corresponding target section based on the route command, the stator segment between the start point of the target section and the target turnout serves as the target stator segment.

S740. The target stator segment is controlled to be electrified.

It should be noted that although various steps in the flowcharts related to the foregoing embodiments are displayed in order as indicated by arrows, these steps are not necessarily executed in order as indicated by arrows. Unless explicitly stated herein, the execution of these steps is not strictly limited in order, and these steps can be executed in other orders. In addition, at least a part of the steps in the flowcharts related to the foregoing embodiments may include multiple steps or multiple stages, which may not necessarily be completed at the same time, but may be executed at different times, and the execution order of these steps or stages may not necessarily be executed in turn, but may be executed alternately or alternately with other steps or at least a part of steps or stages in other steps.

### Embodiment 8

Based on the same invention concept, an embodiment of the present disclosure further provides an apparatus for controlling a stator segment on a maglev train track for implementing the method for controlling a stator segment on a maglev train track. The solution provided by the apparatus is similar to the solution described in the above method, so the specific definition of one or more embodiments of the apparatus for controlling a stator segment on a maglev train track provided below can be found in the above definition of the method for controlling a stator segment on a maglev train track, and will not be repeated here.

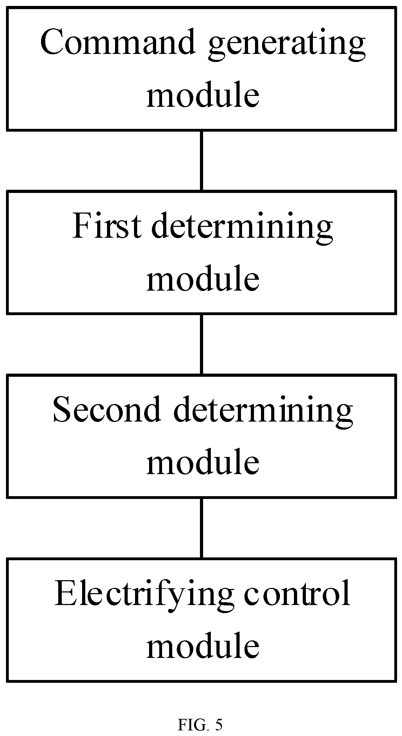

In this embodiment, as shown in FIG. 5, an apparatus for controlling a stator segment on a maglev train track includes:
a command generating module, configured to generate a route command based on target train position information, a target train speed, and a train operation plan;
a first determining module, configured to determine a route section corresponding to the route command and a turnout in a route in a preset interlocking table;
a second determining module, configured to determine a target stator segment corresponding to the route command based on the route section and the turnout in the route; and
an electrifying control module, configured to control the target stator segment to be electrified.

Various modules in the apparatus for controlling a stator segment on a maglev train track can be fully or partially implemented by software, hardware, or a combination thereof. Various foregoing modules can be embedded in or independent of a processor in a computer device in the form of hardware, and can also be stored in a memory in the computer device in the form of software, thereby facilitating the processor to call and execute the operations corresponding to the foregoing modules.

It should be noted that in this embodiment, a route command is generated based on target train position information, a target train speed and a train operation plan; a route section corresponding to the route command and a turnout in a route in a preset interlocking table are determined; a target stator segment corresponding to the route command is determined based on the route section and the turnout in the route; and the target stator segment is controlled to be electrified. By means of the foregoing implementations, after the route command is generated, the route section corresponding to the route command and the turnout in the route can be directly determined, the target stator segment is further determined based on the route section and the turnout in the route, and then the target stator segment is electrified, thereby implementing a control on the stator segment. This facilitates to simplify a control flow of the stator segment, thereby improving a response speed of controlling the stator segment. In turn, it is convenient for a mode for controlling a stator segment on a maglev train track to meet traction control requirements of high-speed maglev trains.

### Embodiment 9

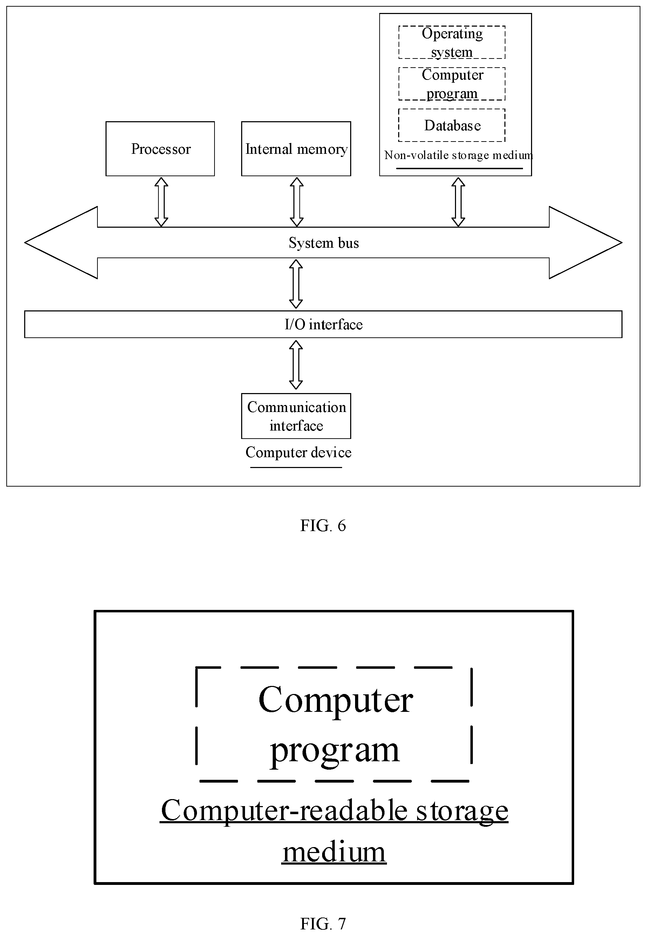

In Embodiment 9, a computer device is provided. The computer device may be a server, with an internal structural diagram shown in FIG. 6. The computer device may include a processor, a memory, and a network interface connected by a system bus. The processor of the computer device is configured to provide computing and control abilities. The memory of the computer device includes a nonvolatile storage medium and an internal memory. An operating system, a computer program and a database are stored in the nonvolatile storage medium. The internal memory provides an environment for the running of the operating system and computer program in the nonvolatile storage medium. The database of the computer device is used for data storage. The network interface of the computer device is configured to communicate with an external terminal through network connection communication. The computer program, when executed by the processor, is configured to implement the method for controlling a stator segment on a maglev train track.

Those skilled in the art may understand that the structure shown in FIG. 6 is merely a block diagram of a partial structure related to the solution of the present disclosure and do not constitute a limitation on the solution of the present disclosure on the computer device to which the solution of the present disclosure is applied. Specifically, the computer device may include more or fewer units than those shown in the figure, or combine some units, or different units.

### Embodiment 10

In Embodiment 10, a system for controlling a stator segment on a maglev train track is provided. With reference to FIG. 3, the system for controlling a stator segment on a maglev train track includes an operation control component, where the operation control component includes the computer device in Embodiment 9. The operation control component is composed of a central operation control unit and a section operation control unit; the section operation control unit is in communication connection with the central operation control unit and is further in communication connection with an on-board operation control unit, a turnout, and a stator segment switch; and the on-board operation control unit is further in communication connection with an on-board positioning device.

It should be noted that both user information (including, but not limited to, user equipment information, personal user information, and the like) and data (including, but not limited to, data for analysis, stored data, displayed data, and the like) involved in the present disclosure are information and data authorized by users or fully authorized by all parties.

It may be understood by a person skilled in the art that the implementation of all or part of the processes in the foregoing embodiment methods can be accomplished by instructing a relevant hardware by a computer program. The computer program may be stored in a nonvolatile computer-readable storage medium, and the computer program, when executed, may include the processes of the embodiments of the methods described above. Any reference to the memory, database or other media used in the embodiments provided in the present disclosure may include at least one of a nonvolatile memory and a volatile memory. The nonvolatile memory may include a read-only memory (ROM), a magnetic tape, a floppy disk, a flash memory, an optical memory, a high- density embedded nonvolatile memory, a resistive random access memory (ReRAM), a magnetoresistive random access memory (MRAM), a ferroelectric random access memory (FRAM), a phase change memory (PCM), a graphene memory, and the like. The volatile memory may include a random access memory (RAM), or an external cache memory. By way of illustration than limitation, RAM may be in various forms, such as a static random access memory (SRAM) or a dynamic random access memory (DRAM). A database involved in each embodiment provided by the present disclosure may include at least one of a relational database and a non-relational database. The non-relational database may include, but is not limited to, a distributed database based on a block chain. The processors involved in the embodiments provided by the present disclosure may be a general processor, a central processing unit, a graphics processing unit, a digital signal processor, a programmable logic, a data processing logic based on quantum computing, and the like, without limitation.

Various technical features of the foregoing embodiments may be combined arbitrarily. For the sake of brevity, all possible combinations of the technical features in the above embodiments are not described. However, the combinations of these technical features should be considered to be within the scope of this specification as long as there is no contradiction therebetween.

The foregoing embodiments only express several implementations of the present disclosure and are described more specifically and detailed, but cannot be construed as limitations to the scope of patent of the present disclosure. It should be pointed out that several modifications and improvements may also be made by those of ordinary skill in the art without departing from the conception of the present disclosure, and all fall within the scope of protection of the present disclosure. Therefore, the scope of patent protection of the present disclosure shall be subject to the appended claims.

## Claims

1. A method for controlling a stator segment on a maglev train track, comprising the following steps:
generating a route command based on target train position information, a target train speed, and a train operation plan;
determining a route section corresponding to the route command and a turnout in a route in a preset interlocking table;
determining a target stator segment corresponding to the route command based on the route section and the turnout in the route; and
controlling the target stator segment to be electrified.

2. The method according to claim 1, wherein the generating a route command based on target train position information, a target train speed, and a train operation plan comprises:
determining whether to trigger generation of the route command based on the target train position information; and
if the generation of the route command needs to be triggered, generating the route command based on the target train speed and the train operation plan.

3. The method according to claim 2, wherein the generating the route command based on the target train speed and the train operation plan further comprises:
determining whether the target train speed is greater than a first speed threshold but not greater than a second speed threshold;
if the target train speed is greater than the first speed threshold but not greater than the second speed threshold, generating one route command based on the train operation plan;
determining whether the target train speed is greater than the second speed threshold; and
if the target train speed is greater than the second speed threshold, generating at least two route commands with a sequential order based on the train operation plan.

4. The method according to claim 3, wherein after generating at least two route commands with the sequential order based on the train operation plan, the method further comprises:
determining whether a track route between a current position of a target train and a start point of a track route corresponding to the last route command in the sequential order is in a state that a track is clear, a turnout position is accurate and the track is exclusively used by the target train;
if the track route between the current position of the target train and the start point of the track route corresponding to the last route command in the sequential order is in the state that the track is clear, the turnout position is accurate and the track is exclusively used by the target train, executing the step of determining a route section corresponding to the route command and a turnout in a route in a preset interlocking table, wherein the route command is a first route command in the sequential order.

5. The method according to claim 2, wherein the generating the route command based on the target train speed and the train operation plan comprises:
generating a main route command and a standby route command based on the train operation plan and the target train speed; and
obtaining the route command based on the main route command and the standby route command.

6. The method according to claim 1, wherein the determining a target stator segment corresponding to the route command based on the route section and the turnout in the route comprises:
determining whether the route section is in a clear state;
if the route section is in the clear state, continuing to determine whether the route in the route is located at a position corresponding to the route command;
if the route section is not in the clear state, adjusting the turnout in the route to the position corresponding to the route command;
locking the route section and the turnout in the route to obtain a target section and a target turnout; and
obtaining a target stator segment corresponding to the route command based on the target section and the target turnout.

7. The method according to claim 6, wherein the obtaining a target stator segment corresponding to the route command based on the target section and the target turnout comprises:
determining whether the target turnout is arranged on the target section;
if the target turnout is arranged on the target section, determining whether the target turnout serves as a start point or end point of a route on the corresponding target section based on the route command;
if determining that the target turnout serves as the start point of the route on the corresponding target section based on the route command, serving a stator segment between the target turnout and an end point of the target section where the target turnout is located as a target stator segment; and
if determining that the target turnout serves as the end point of the route on the corresponding target section based on the route command, serving a stator segment between a start point of the target section and the target turnout as the target stator segment.

8. An apparatus for controlling a stator segment on a maglev train track, wherein the apparatus comprises:
a command generating module, configured to generate a route command based on target train position information, a target train speed, and a train operation plan;
a first determining module, configured to determine a route section corresponding to the route command and a turnout in a route in a preset interlocking table;
a second determining module, configured to determine a target stator segment corresponding to the route command based on the route section and the turnout in the route; and
an electrifying control module, configured to control the target stator segment to be electrified.

9. A computer device, comprising a processor and a memory on which a computer program is stored, wherein the processor, when executing the computer program, is configured to implement steps of the method according to any one of claims 1 to 7.

10. A system for controlling a stator segment on a maglev train track, comprising an operation control component, wherein the operation control component comprises the computer device according to claim 6; the operation control component is composed of a central operation control unit and a section operation control unit; the section operation control unit is in communication connection with the central operation control unit and is also in communication connection with an on-board operation control unit, a turnout, and a stator segment switch; and the on-board operation control unit is further in communication connection with an on-board positioning device.
